# FASCICULE DE BREVET EUROPEEN

(11) **EP 0 742 077 B1**
(45) Date de publication et mention de la délivrance du brevet: **29.12.1999**
(21) Numéro de dépôt: 96400967.4
(22) Date de dépôt: 06.05.1996
(51) Int. Cl.: B24B 13/01, B23C 5/16

(54) **Fraise comportant au moins une dent, notamment pour l'usinage de lentilles ophtalmiques**
Fräswerkzeug mit zumindest einem Zahn, insbesondere zum Bearbeiten von ophtalmische Linsen
Milling tool having at least one tooth, especially for machining ophthalmic lenses

(30) Priorité: 09.05.1995 FR 9505467
(43) Date de publication de la demande: 13.11.1996
(73) Titulaire: ESSILOR INTERNATIONAL (Compagnie Générale d'Optique), F-94220 Charenton-le-Pont (FR)
(72) Inventeur: Moreau, Jacques, 77176 Savigny le Temple (FR)
(74) Mandataire: CABINET BONNET-THIRION

(56) Documents cités:
- DE-U- 9 318 728
- US-A- 3 056 186
- US-A- 5 092 083

## Description

La présente invention concerne d'une manière générale les fraises du type de celles utilisées par exemple pour l'usinage de lentilles ophtalmiques.

Elle vise plus particulièrement celles de ces fraises qui comportent, en saillie, à distance de leur axe de rotation, au moins une dent, telle que, par exemple, une dent polycristalline en diamant.

Une fraise de ce type se trouve par exemple décrite dans le document de brevet US No 5 092 083.

En pratique, dans ce document de brevet, deux dents sont prévues, en positions diamétralement opposées l'une par rapport à l'autre, à la faveur d'échancrures affectant la zone de crête d'une couronne dont les faces interne et externe sont par ailleurs chacune revêtues d'un matériau abrasif.

Suivant la nature de l'usinage pratiqué, et/ou celle de la matière travaillée, la granulométrie des déchets d'usinage formés par les dents est essentiellement variable.

Le plus souvent, cependant, cette granulométrie va de celle d'une poussière fine à celle de grains de riz.

Mais il s'avère que, avec certaines matières synthétiques, les déchets d'usinage peuvent aussi former de réels copeaux, qui, enroulés en tire-bouchon, s'étendent en pratique sur plusieurs centimètres.

L'évacuation de ces copeaux est dès lors problématique.

Il peut en résulter un engorgement de la machine concernée, au risque d'incidents de fonctionnement pour celle-ci.

La présente invention a d'une manière générale pour objet une disposition permettant de façon assez surprenante de surmonter très simplement cette difficulté.

De manière plus précise, elle a pour objet une fraise du genre comportant, en saillie, à distance de son axe de rotation, au moins une dent, cette fraise étant d'une manière générale caractérisée en ce qu'elle comporte, en outre, en avant de la dent dans le sens de la rotation, une contre-dent faisant brise-copeaux.

En pratique, cette contre-dent se présente sous la forme générale d'un flasque, qui, parallèle à la face avant de la dent, a en élévation un contour semblable à celui de celle-ci, et, préférentiellement, elle est ajourée d'un trou.

Les essais montrent que, avec une telle contre-dent, et sans qu'une explication formelle puisse être en toute certitude avancée à ce sujet, les copeaux formés par la dent se trouvent avantageusement fractionnés en fragments dont la taille atteint au plus celle d'un grain de riz.

On peut cependant observer que les copeaux, ou certains au moins d'entre eux, sont conduits à traverser la contre-dent à la faveur de son trou, et que leur fragmentation intervient à l'occasion de cette traversée et sous la sollicitation de la turbulence due à la contre-dent aussi bien qu'à celle due au fluide d'assistance qui, pour le refroidissement, notamment, de l'ensemble, est, par ailleurs, conjointement mis en oeuvre.

Quoi qu'il en soit, les copeaux formés étant dûment fragmentés, leur évacuation ne soulève plus de difficulté.

Les caractéristiques et avantages de l'invention ressortiront d'ailleurs de la description qui va suivre, à titre d'exemple, en référence aux dessins schématiques annexés sur lesquels :
la figure 1 est une vue en élévation, de face, d'une fraise suivant l'invention ;
la figure 2 en est une vue de dessus, suivant la flèche II de la figure 1 ;
la figure 3 en est une vue en coupe axiale, suivant la ligne III-III de la figure 1 ;
la figure 4 reprend, à échelle supérieure, et avec un arrachement local, le détail de la figure 1 repéré par un encart IV sur cette figure 1 ;
la figure 5 est, à l'échelle de la figure 4, une vue partielle en élévation, de face, de la fraise suivant l'invention, suivant la flèche V de la figure 4.

Tel qu'illustré sur ces figures, et de manière connue en soi, la fraise 10 suivant l'invention, qui est destinée en pratique à l'usinage d'une lentille ophtalmique en matière synthétique, non représentée, dûment glantée sur un support, comporte, globalement, un plateau 11, dont le contour est globalement circulaire, et un arbre 12, qui, coaxial du plateau 11, est propre à son entraînement en rotation.

Soit A₁ l'axe de rotation correspondant.

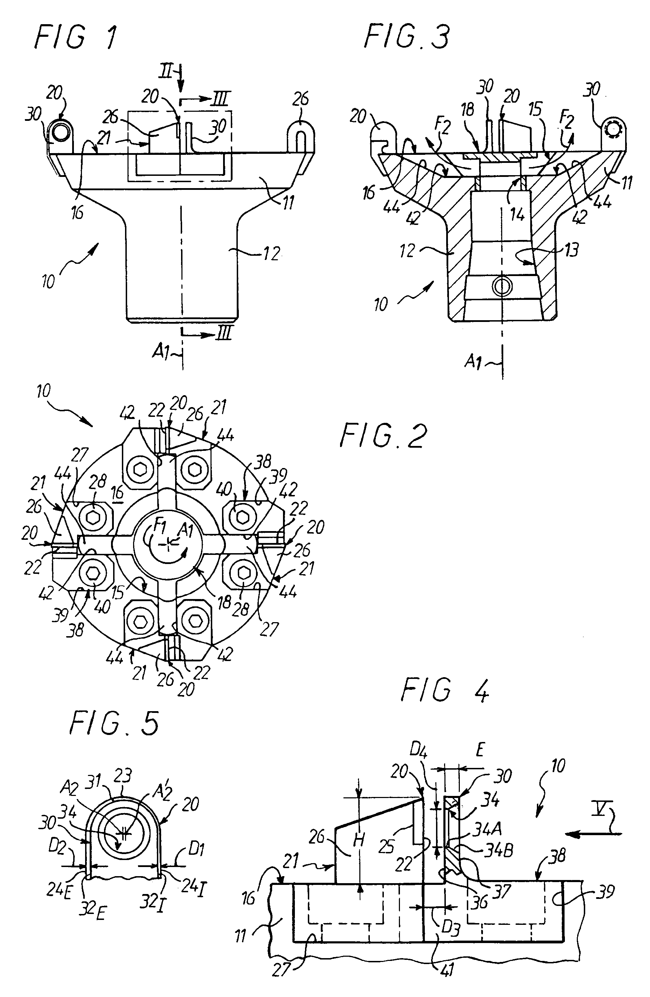

Cet axe de rotation A₁ est schématisé en traits interrompus sur les figures 1 et 3, et il est repéré par sa trace sur la figure 2

En pratique, l'arbre 12 est d'un seul tenant avec le plateau 11, et il s'agit d'un arbre creux dont l'évidement interne 13 forme axialement, par son débouché, au niveau du plateau 11, une arrivée de fluide 14 mise à profit pour l'intervention d'un quelconque fluide d'assistance, par exemple de l'eau, propre notamment à un refroidissement de l'ensemble.

Dans la forme de réalisation représentée, cette arrivée de fluide 14 intervient au fond d'un dégagement 15 affectant en creux la surface supérieure 16 du plateau 11, qui, par ailleurs, est plane, en s'étendant sensiblement perpendiculairement à l'axe de rotation A₁.

En pratique, et tel que représenté, cette arrivée de fluide 14 est sous le contrôle d'un diffuseur 18.

Ces dispositions sont bien connues par elles-mêmes, et, ne relevant pas en propre de la présente invention, elles ne seront pas décrites plus en détail ici.

De manière également connue en soi, la fraise 10 suivant l'invention comporte, en saillie, à distance de son axe de rotation A₁, et, en pratique, à la périphérie de son plateau 11, au moins une dent 20.

Il s'agit, par exemple, d'une lame polycristalline en diamant, qui est dûment rapportée sur un bloc de support 21, et dont la face avant 22 dans le sens de rotation repéré par la flèche F1 sur la figure 2 s'étend sensiblement suivant un plan diamétral du plateau 11.

Ainsi qu'il est mieux visible sur la figure 5, le contour, en élévation, d'une telle dent 20, qui correspond à son contour d'arête, est un contour en arceau, présentant une partie médiane 23 hémicirculaire.

Soit A₂, tel que schématisé par sa trace sur la figure 5, l'axe de cette partie médiane 23.

Outre la partie médiane 23 hémicirculaire, le contour de la dent 20 comporte deux jambages 24E, 24I, sensiblement droits et parallèles, perpendiculairement à la surface supérieure 16 du plateau 11.

En pratique, l'arête matérialisée par un tel contour est une arête tranchante, la tranche de la dent 20 étant dûment biseautée en conséquence.

En pratique également, eu égard aux mouvements relatifs que connaissent l'une par rapport à l'autre la fraise 10 et la surface à usiner, l'attaque de la surface à usiner se fait du côté radialement le plus interne de la dent 20, auquel correspond le jambage 24I de son contour, tandis que la finition de cette surface à usiner se fait du côté radialement le plus externe de cette dent 20, auquel correspond le jambage 24E de son contour.

Dans la forme de réalisation représentée, la lame constituant la dent 20 est contrebutée à son dos, c'est-à-dire sur sa face arrière 25, par un dosseret 26, venu d'un seul tenant de son bloc de support 21 et dûment profilé à son image.

En pratique, également, l'ensemble est rapporté de manière amovible sur le plateau 11, à la faveur d'un dégagement 27 prévu de manière complémentaire en creux sur la surface supérieure 16 de celui-ci, et à l'aide par exemple d'une vis 28.

Dans la forme de réalisation représentée, la fraise 10 suivant l'invention comporte une pluralité de dents 20, qui sont régulièrement réparties à sa périphérie, et, plus précisément, à la périphérie de son plateau 11, suivant une même circonférence de celui-ci.

Par exemple, et tel que représenté, quatre dents 20 sont ainsi prévues, à 90° deux à deux, le long de la périphérie du plateau 11.

Suivant l'invention, la fraise 10 comporte, en outre, en avant de l'une au moins des dents 20 dans le sens de rotation repéré par la flèche F1 sur la figure 2, une contre-dent 30 faisant brise-copeaux.

En pratique, il est ainsi associé une contre-dent 30 à chacune des dents 20.

Dans la forme de réalisation représentée, cette contre-dent 30 se présente sous la forme générale d'un flasque, qui, parallèle à la face avant 22 de la dent 20 à laquelle elle est associée, a, en élévation, un contour semblable à celui de celle-ci.

Il s'agit donc d'un contour en arceau présentant une partie médiane 31 hémicirculaire et deux jambages latéraux 32E, 32I.

Préférentiellement, et ainsi qu'il est mieux visible sur la figure 5, le contour en élévation de la contre-dent 30 est, en tout point, légèrement en retrait par rapport à celui de la dent 20 à laquelle il est associé, pour que cette contre-dent 30 ne risque pas de venir intempestivement toucher la surface usinée.

En pratique, la contre-dent 30 est légèrement décalée vers l'axe de rotation A₁ par rapport à la dent 20, en sorte que son contour est plus proche de celui de cette dent 20 du côté radialement le plus interne de celle-ci que de son côté radialement le plus externe.

Autrement dit, la distance D₁ séparant l'un de l'autre les jambages 24I, 32I des contours en cause est plus faible que la distance D₂ séparant l'un de l'autre les jambages 24E, 32E opposés de ces contours.

Cela permet à la contre-dent 30 d'être au plus près de la dent 20 du côté d'attaque de celle-ci.

Dans la pratique, la distance D₁ est préférentiellement comprise entre 0 et 0,1 mm.

Corollairement, la distance D₂ est au moins de l'ordre de 0,35 mm.

La contre-dent 30 associée à chaque dent 20 s'étend à distance de celle-ci.

Préférentiellement, elle est écartée de la dent 20 d'une distance D₃ comprise entre 2,5 mm et 3,5 mm.

Dans la pratique, cette distance D₃ est de l'ordre de 3 mm.

La contre-dent 30 est par ailleurs ajourée d'un trou 34.

Ce trou 34 a en pratique un contour circulaire.

Compte tenu du décalage général de la contre-dent 30 par rapport à la dent 20, l'axe A'₂ de ce trou 34 est décalé radialement en direction de l'axe de rotation A₁ par rapport à l'axe A₂ de la partie médiane 23 du contour de la dent 20, d'une quantité égale à

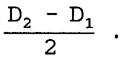

Préférentiellement, le trou 34 va en s'évasant de la face arrière 36 à la face avant 37 de la contre-dent 30 sur une partie au moins de l'épaisseur E de celle-ci.

Dans la forme de réalisation représentée, le trou 34 comporte, à compter de la face arrière 36, un premier tronçon 34A, qui est cylindrique, puis un deuxième tronçon 34B, qui est tronconique.

Préférentiellement, le diamètre D₄ du trou 34 sur la face arrière 36 est au moins égal au tiers de la hauteur H de la dent 20 mesurée à compter de la surface supérieure 16 du plateau 11.

Dans la pratique, ce diamètre D₄ est de l'ordre de 5,5 mm.

Conjointement, l'épaisseur E de la contre-dent 30 est de l'ordre de 2 mm.

Dans la forme de réalisation représentée, la contre-dent 30 associée à chacune des dents 20 est d'un seul tenant avec un bloc de support 38 par lequel elle est rapportée sur le plateau 11, à la faveur d'un évidement 39 de celui-ci, et à l'aide par exemple d'une vis 40.

A l'arrière, le bloc de support 38 comporte un talon 41, formant entretoise, pour le contrôle de l'écartement vis-à-vis de la dent 20.

Par exemple, la contre-dent 30 peut être réalisée en métal, et son bloc de support 38 avec elle.

Mais, préférentiellement, elle est dépourvue d'arête tranchante, pour ne pas être blessante.

Autrement dit, ses arêtes résultent de la conjonction de surfaces orthogonales, au lieu de résulter de la conjonction de surfaces faisant entre elles un angle aigu comme pour la dent 20.

Préférentiellement, et tel que représenté, pour chaque dent 20, la surface supérieure 16 du plateau 11 présente, en creux, une saignée 42 oui s'étend radialement de l'arrivée de fluide 14 à cette dent 20 et à la contre-dent 30 qui lui est associée.

Au voisinage, au moins, de la dent 20 et de la contre-dent 30, le fond 44 de la saignée 42 est oblique par rapport à l'axe de rotation A₁, en se rapprochant de la surface supérieure 16 de la fraise 10, et, plus précisément, de son plateau 11, au fur et à mesure qu'il s'éloigne de cet axe de rotation A₁.

Dans la pratique, l'angle que fait avec la surface supérieure 16 du plateau 11 le fond 44 de la saignée 42 est par exemple de l'ordre de 25°.

Au montage, les contre-dents 30 protègent avantageusement l'opérateur des dents 20, au bénéfice de la sécurité.

En service, le fluide d'assistance dûment dirigé sur les dents 20 et les contre-dents 30 par les saignées 42, suivant les flèches F2 de la figure 3, grâce au fond 44 relevé de ces saignées 42, crée une turbulence au voisinage de ces dents 20 et de ces contre-dents 30, et les contre-dents 30 assurent avantageusement une fragmentation des copeaux formés.

Leur trou 34 facilite l'évacuation des fragments de copeaux résultants.

Il s'avère, d'ailleurs, a l'expérience, que l'évasement de ce trou 34 est lui-même favorable à cette évacuation.

Il s'avère, également, à l'expérience, que, en cas d'incidents de fonctionnement, par exemple en cas de déglantage de la lentille ophtalmique travaillée, les contre-dents 30 prévues suivant l' invention protègent avantageusement les dents 20.

Bien entendu, la présente invention ne se limite pas à la forme de réalisation décrite et représentée, mais englobe toute variante d'exécution de l'objet des revendications.

## Revendications

1. Fraise du genre comportant, en saillie, à distance de son axe de rotation (A₁), au moins une dent (20), caractérisée en ce qu'elle comporte, en outre, en avant de la dent (20) dans le sens de la rotation, une contre-dent (30) faisant brise-copeaux.

2. Fraise suivant la revendication 1, caractérisée en ce que la contre-dent (30) se présente sous la forme générale d'un flasque, qui, parallèle à la face avant (22) de la dent (20), a, en élévation, un contour semblable à celui de celle-ci.

3. Fraise suivant la revendication 2, caractérisée en ce que le contour en élévation de la contre-dent (30) est légèrement en retrait par rapport à celui de la dent (20).

4. Fraise suivant la revendication 3, caractérisée en ce que la contre-dent (30) est légèrement décalée vers l'axe de rotation (A₁) par rapport à la dent (20), en sorte que son contour est plus proche de celui de cette dent (20) du côté radialement le plus interne de celle-ci que du côté radialement le plus externe.

5. Fraise suivant l'une quelconque des revendications 1 à 4, caractérisée en ce que la contre-dent (30) est écartée de la dent (20) d'une distance (D₃) comprise entre 2,5 mm et 3,5 mm.

6. Fraise suivant l'une quelconque des revendications 1 à 5, caractérisée en ce que la contre-dent (30) est écartée de la dent (20) d'une distance (D₃) de l'ordre de 3 mm.

7. Fraise suivant l'une quelconque des revendications 1 à 6, caractérisée en ce que la contre-dent (30) est ajourée d'un trou (34).

8. Fraise suivant la revendication 7, caractérisée en ce que, le contour en élévation de la dent (20) étant un contour en arceau présentant une partie médiane (23) hémicirculaire, le trou (34) de la contre-dent (30) a un contour circulaire.

9. Fraise suivant les revendications 4 et 8, prises conjointement, caractérisée en ce que l'axe (A'₂) du trou (34) de la contre-dent (30) est décalé vers l'axe de rotation (A₁) par rapport à l'axe (A₂) de la partie médiane (23) du contour de la dent (20).

10. Fraise suivant l'une quelconque des revendications 7 à 9, caractérisée en ce que, sur une partie au moins de l'épaisseur (E) de la contre-dent (30), le trou (34) de cette contre-dent (30) va en s'évasant de sa face arrière (36) à sa face avant (37).

11. Fraise suivant la revendication 10, caractérisée en ce que le diamètre (D₄) du trou (34) de la contre-dent (30) sur sa face arrière (36) est au moins égal au tiers de la hauteur (H) de la dent (20).

12. Fraise suivant la revendication 11, caractérisée en ce que le diamètre (D₄) du trou (34) de la contre-dent (30) sur sa face arrière (36) est de l'ordre de 5,5 mm.

13. Fraise suivant l'une quelconque des revendications 1 à 12, caractérisée en ce que la contre-dent (30) est dépourvue d'arête tranchante.

14. Fraise suivant l'une quelconque des revendications 1 à 13, caractérisée en ce que, une arrivée de fluide (14) étant prévue axialement, une saignée (42) s'étend radialement de cette arrivée de fluide (14) à la dent (20) et à la contre-dent (30) associée à celle-ci.

15. Fraise suivant la revendication 14, caractérisée en ce que, au voisinage, au moins, de la dent (20) et de la contre-dent (30), le fond (44) de la saignée (42) est oblique par rapport à l'axe de rotation (A₁), en se rapprochant de la surface supérieure (16) de la fraise (10) au fur et à mesure qu'il s'éloigne de cet axe de rotation (A₁).

16. Fraise suivant l'une quelconque des revendications 14, 15, caractérisée en ce que l'arrivée de fluide (14) est sous le contrôle d'un diffuseur (18).

17. Fraise suivant l'une quelconque des revendications 1 à 16, caractérisée en ce qu'elle comporte une pluralité de dents (20), qui sont régulièrement réparties à sa périphérie, et à chacune desquelles il est associé une contre-dent (30).

## Claims

1. A milling cutter of the kind comprising in projecting relationship at a spacing from its axis of rotation (A₁) at least one tooth (20) characterised in that it further comprises in front of the tooth (20) in the direction of rotation a counter-tooth (30) acting as a chip breaker.

2. A milling cutter according to claim 1 characterised in that the counter-tooth (30) is in the general form of a plate which, parallel to the front face (22) of the tooth (20), is in elevation of a contour similar to the contour of the tooth (20).

3. A milling cutter according to claim 2 characterised in that the contour in elevation of the counter-tooth (30) is slightly set back with respect to that of the tooth (20).

4. A milling cutter according to claim 3 characterised in that the counter-tooth (30) is slightly displaced towards the axis of rotation (A₁) with respect to the tooth (20) in such a way that its contour is closer to that of said tooth (20) on the more radially inward side thereof than on the more radially outward side.

5. A milling cutter according to any one of claims 1 to 4 characterised in that the counter-tooth (30) is spaced from the tooth (20) by a distance (D₃) of between 2.5 mm and 3.5 mm.

6. A milling cutter according to any one of claims 1 to 5 characterised in that the counter-tooth (30) is spaced from the tooth (20) by a distance (D₃) of the order of 3 mm.

7. A milling cutter according to any one of claims 1 to 6 characterised in that the counter-tooth (30) is apertured by a hole (34).

8. A milling cutter according to claim 7 characterised in that, the elevational contour of the tooth (20) being an arcuate contour having a semicircular central portion (32), the hole (34) in the counter-tooth (30) is of a circular contour.

9. A milling cutter according to claims 4 and 8 in combination characterised in that the axis (A'₂) of the hole (34) of the counter-tooth (30) is displaced towards the axis of rotation (A₁) with respect to the axis (A₂) of the central portion (23) of the contour of the tooth (20).

10. A milling cutter according to any one of claims 7 to 9 characterised in that, over a part at least of the thickness (E) of the counter-tooth (30), the hole (34) in said counter-tooth (30) enlarges from its rear face (36) to its front face (37).

11. A milling cutter according to claim 10 characterised in that the diameter (D₄) of the hole (34) in the counter-tooth (30) on its rear face (36) is at least equal to a third of the height (H) of the tooth (20).

12. A milling cutter according to claim 11 characterised in that the diameter (D₄) of the hole (34) in the counter-tooth (30) on its rear face (36) is of the order of 5.5 mm.

13. A milling cutter according to any one of claims 1 to 12 characterised in that the counter-tooth (30) is without a cutting edge.

14. A milling cutter according to any one of claims 1 to 13 characterised in that, a fluid supply (14) being provided axially, a groove (42) extends radially from said fluid supply (14) to the tooth (20) and to the counter-tooth (30) associated therewith.

15. A milling cutter according to claim 14 characterised in that, in the vicinity at least of the tooth (20) and the counter-tooth (30), the bottom (44) of the groove (42) is inclined with respect to the axis of rotation (A₁), becoming closer to the upward surface (16) of the milling cutter (10) as it extends away from said axis of rotation (A₁).

16. A milling cutter according to either one of claims 14 and 15 characterised in that the fluid supply (14) is under the control of a diffuser (18).

17. A milling cutter according to any one of claims 1 to 16 characterised in that it comprises a plurality of teeth (20) which are regularly distributed at its periphery and with each of which there is associated a counter-tooth (30).

## Patentansprüche

1. Fräse des Typs umfassend zumindest einen vorspringenden Zahn (20), der unter Abstand von der Rotationsachse (A₁) der Fräse vorgesehen ist, dadurch gekennzeichnnet, daß die Fräse ferner vor dem Zahn (20) in der Rotationsrichtung einen spanbrechenden Gegenzahn (30) umfaßt.

2. Fräse nach Anspruch 1, dadurch gekennzeichnet, daß der Gegenzahn (30) im wesentlichen flanschförmig ausgebildet ist, welcher parallel zur Vorderfläche (22) des Zahnes (20) in Erhebung einen Umriß aufweist, welcher jenem des Zahnes (20) entspricht.

3. Fräse nach Anspruch 2, dadurch gekennzeichnet, daß der Umriß in Erhebung des Gegenzahnes (30) leicht rückspringend mit Bezug auf jenen des Zahnes (20) ist.

4. Fräse nach Anspruch 3, dadurch gekennzeichnet, daß der Gegenzahn (30) leicht hin zu der Rotationsachse (A₁) bezüglich des Zahnes (20) versetzt ist, so daß dessen Umriß bzw. Kontur an der radialwärts inneren Seite jenem bzw. jener des Zahnes (20) näher ist als an der radialwärts äußeren Seite.

5. Fräse nach einem der Ansprüche 1 bis 4, dadurch gekennzeichnet, daß der Gegenzahn (30) um einen Abstand (D₃) von dem Zahn (20) beabstandet ist, welcher zwischen 2,5 mm und 3,5 mm beträgt.

6. Fräse nach einem der Anspräche 1 bis 5, dadurch gekennzeichnet, daß der Gegenzahn (30) von dem Zahn (20) um eine Entfernung (D₃) in der Größenordnung von 3 mm beabstandet ist.

7. Fräse nach einem der Anspräche 1 bis 6, dadurch gekennzeichnet, daß der Gegenzahn (30) von einem Loch (34) durchbrochen ist.

8. Fräse nach Anspruch 7, dadurch gekennzeichnet, daß der erhöhte bzw. erhabene Umriß bzw. die erhöhte bzw. erhabene Kontur des Zahnes (20) bogenförmig ist, mit einem halbkreisförmigen mittleren Abschnitt (23), wobei die Öffnung bzw. das Loch (34) des Gegenzahnes (30) einen kreisförmigen Umriß aufweist.

9. Fräse nach einer Kombination der Anspräche 4 und 8, dadurch gekennzeichnet, daß die Achse (A'₂) der Öffnung (34) des Gegenzahnes (30) hin zu der Rotationsachse (A₁) bezäglich der Achse (A₂) des mittleren Abschnittes (23) des Umrisses bzw. der Kontur des Zahnes (20) versetzt ist.

10. Fräse nach einem der Ansprüche 7 bis 9, dadurch gekennzeichnet, daß auf zumindest einem Teil der Dicke (E) des Gegenzahnes (30) die Öffnung (34) des Gegenzahnes (30) sich von der hinteren Fläche (36) zu der vorderen Fläche (37) ausweitet.

11. Fräse nach Anspruch 10, dadurch gekennzeichnet, daß der Durchmesser (D₄) der Öffnung (34) des Gegenzahnes (30) an der hinteren Fläche (36) zumindest gleich einem Drittel der Höhe (H) des Zahnes (20) ausmacht.

12. Fräse nach Anspruch 11, dadurch gekennzeichnet, daß der Durchmesser (D₄) der Öffnung (34) des Gegenzahnes (30) an der hinteren Fläche (36) in der Größenordnung von 5,5 mm liegt.

13. Fräse nach einem der Anspräche 1 bis 12, dadurch gekennzeichnet, daß der Gegenzahn (30) keinen Schneidgrad aufweist.

14. Fräse nach einem der Anspräche 1 bis 13, dadurch gekennzeichnet, daß eine Fluidzufuhr (14) axialwärts vorgesehen ist, wobei sich ein Schnitt bzw. Kanal (42) radialwärts von der Fluidzufuhr (14) zu dem Zahn (20) und dem diesen zugeordneten Gegenzahn (30) erstreckt.

15. Fräse nach Anspruch 14, dadurch gekennzeichnet, daß in zumindest der Nachbarschaft des Zahnes (20) und des Gegenzahnes (30) der Boden (44) des Schnittes bzw. der Kerbe (42) schräg ist mit Bezug auf die Rotationsachse (A₁), wobei eine Annäherung an die obere Fläche (16) der Fräse (10) in dem Maße auftritt, wie die Entfernung zu dieser Rotationsachse (A₁) zunimmt.

16. Fräse nach einem der Ansprüche 14, 15, dadurch gekennzeichnet, daß die Fluidzufuhr (14) mittels eines Verteilers bzw. Diffusors (18) gesteuert wird.

17. Fräse nach einem der Ansprüche 1 bis 16, dadurch gekennzeichnet, daß sie eine Vielzahl von Zähnen (20) enthält, welche regelmäßig um dessen Peripherie verteilt sind, wobei jedem der Zähne (20) ein Gegenzahn (30) zugeordnet ist.
